# EUROPEAN PATENT APPLICATION

(11) **EP 1 466 823 A1**
(43) Date of publication of application: **13.10.2004**
(21) Application number: 03425220.5
(22) Date of filing: 07.04.2003
(51) Int. Cl.: B62J 35/00, B62K 11/08

(54) **A motorcycle fuel tank**

(71) Applicant: Ducati Motor Holding S.p.A., 40132 Bologna (IT)
(72) Inventor: Cracchi, Claudio, 40011 Anzola Emilia (Bologna) (IT); Forni, Andrea, 40133 Bologna (IT); Gesi, Andrea, 57025 Piombino (Livorno) (IT); Mengoli, Gianluigi, 40054 Budrio (Bologna) (IT); Negroni, Luciano, 40024 Castel San Pietro Terme (Bologna) (IT); Volpini, Alessandro, 06055 Marciano (Perugia) (IT); Zampieri, Pierluigi, 31010 Farra di Soligo (Treviso) (IT)
(74) Representative: Giambrocono, Alfonso, Dr. Ing.

(57) **Abstract**

The invention relates to a motorcycle fuel tank with a seat (1a), the fuel tank (1) comprising a first section (2) located in front of the seat and having a filler inlet (6), a second section (3) connected to the first section (2) by an intermediate section (4). The second section (3) extends at the back of the seat (1a) in the end part of the motorcycle, the intermediate section (4) being under the seat (1a) and the second section (3) having a maximum fill level higher than the maximum fill level of the intermediate section (4), for optimum use of the space close to the seat (1a) and an increased fuel tank (1) capacity. There is also a device (5) for emptying air and fuel vapours from the upper part of the second section (3).

## Description

The present invention relates to a motorcycle fuel tank.

More precisely, the fuel tank according to the present invention is partially positioned under the motorcycle seat and extends backwards beyond the seat, also occupying the end part of the motorcycle commonly known as the rear fairing.

A particularly significant problem in current motorcycles is the problem of space inside the motorcycle itself, above all in the area around the engine and the fuel tank.

Due to pollution prevention standards which require the use of increasingly sophisticated and bulky supply systems (airbox, injection, etc.), and of liquid cooling systems for the engine, there is an increasing need for space for the components required by the respective systems.

This problem has a negative effect on the fuel tank fuel capacity, which continues to be reduced to leave space for the other components, with consequent problems in terms of motorcycle running autonomy.

Moreover, in some types of motorcycles, the so-called rally, or "enduro" type, or in motorcycles for long journeys for "raids", fuel tanks with increased capacity have be introduced, although they are not always attractive and also tend to raise the motorcycle centre of gravity.

To overcome these disadvantages, motorcycles with auxiliary fuel tanks were proposed, to increase the fuel capacity relative to the single fuel tank in front of the motorcycle seat.

Examples of these fuel tanks are known from patent US-4 469 190 and patent application JP-61-92974.

These documents describe motorcycles with auxiliary fuel tanks connected to the main fuel tank and positioned under the motorcycle seat, or over the rear wheel.

These solutions also proved not entirely satisfactory both as regards use of the space inside the motorcycle and the increase in fuel tank capacity.

One aim of the present invention is to provide an improved motorcycle fuel tank which allows the achievement of a good fuel capacity in the fuel tank and which leaves space in the area around the engine for the auxiliary components and the relative systems.

Another aim of the present invention is to provide a motorcycle fuel tank which is located in a protected position and which is simple to fit and remove.

Yet another aim of the present invention is to provide a motorcycle fuel tank which safely contains the fuel and is reliable in allowing the tank to be completely filled with and emptied of fuel.

In accordance with one aspect of it, the present invention discloses a motorcycle fuel tank as described in claim 1.

The dependent claims describe preferred, advantageous embodiments of the invention.

The preferred embodiments of the invention will now be described, without restricting the scope of the inventive concept, with reference to the accompanying drawings in which:
Figure 1 is a schematic view of the motorcycle fuel tank according to the present invention;
Figure 2 is a schematic view of an alternative embodiment of the motorcycle fuel tank according to the present invention;
Figure 3 is a side cross-section of the motorcycle fuel tank illustrated in Figure 1; and
Figure 4 illustrates several details of the motorcycle fuel tank of Figures 1 and 3.

With reference to the accompanying drawings, the numeral 1 denotes a fuel tank for a motorcycle (not illustrated) with a seat 1a.

The fuel tank 1 comprises a first section 2 and a second section 3 connected to one another by an intermediate section 4.

Each section 2, 3 and 4 has a different maximum fuel fill level. The first section 2 has a maximum fill level higher than the maximum fill level of the second section 3 by a height H, whilst the intermediate section 4 has a maximum fill level lower than the maximum fill level of the second section 3.

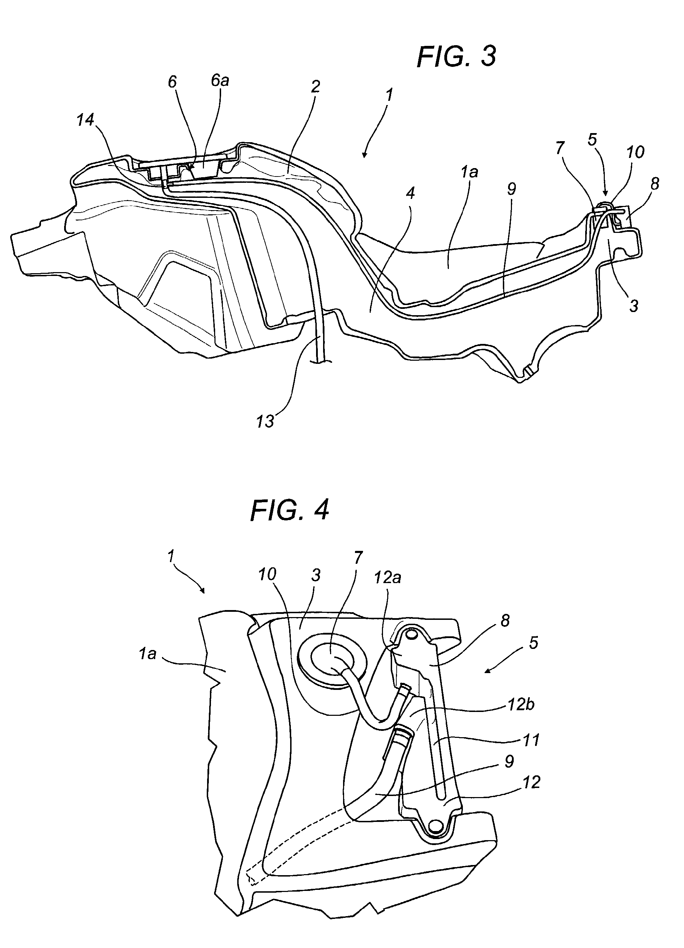

As is more clearly illustrated in Figure 3, the first section 2 corresponds to the part of the fuel tank located in front of the motorcycle seat 1a, and the second section 3 is located at the back of the seat 1a and extends in the end part of the motorcycle, in particular in the part of the motorcycle commonly known as the rear fairing.

The two sections are connected by an intermediate section 4 extending substantially under the motorcycle seat.

To allow the second section 3 to be completely filled there are means 5 for emptying the air and fuel vapours remaining in the upper part of the second section 3.

The first section 2 has an inlet 6, with a cap 6a, for filling up with fuel, so that during motorcycle refuelling a closed volume of air and fuel vapours forms in the second section 3 and must be discharged from it.

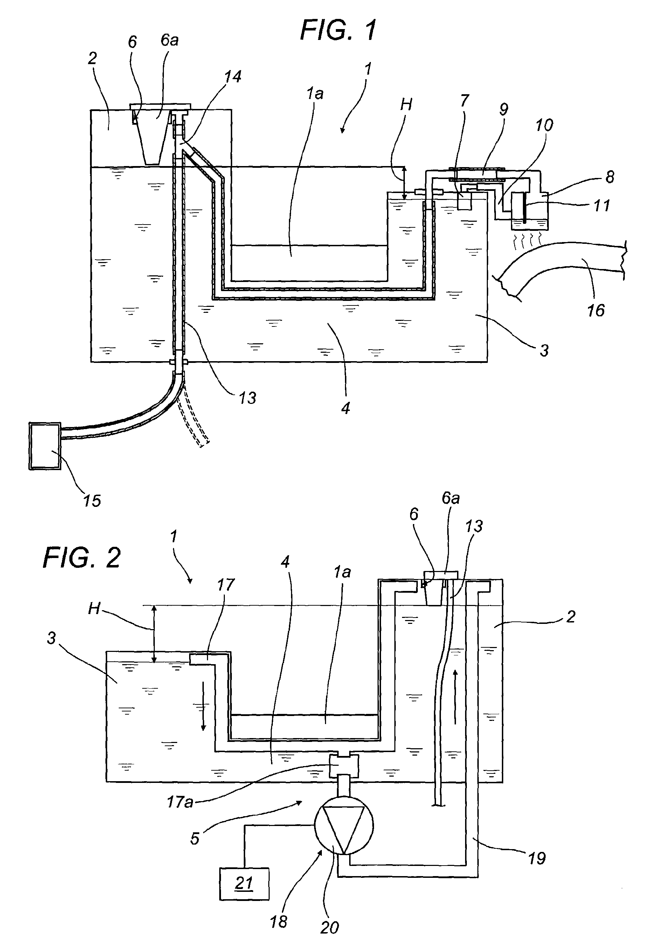

In the embodiment illustrated in Figures 1, 3 and 4 the emptying means 5 are located in the upper part of the second section 3.

The means 5 comprise a roll-over-valve (R.O.V.) 7 designed to act as a breather and to retain the fuel if the second section 3 maximum level is exceeded or if the motorcycle leans or tips over to such an extent as to allow the fuel to flow out, a liquid - vapour separator 8 and an air and fuel vapour breather pipe 9.

The valve 7 is of the known type and basically comprises a float with a shut off valve for an air duct and a spring also able to close the air duct when the valve exceeds a given angle of inclination. The valve 7 is connected by a short connecting pipe 10 to the lower part of the separator 8 in which any fuel which comes out of the valve 7 collects.

The separator 8 comprises a diaphragm 11 which prevents the liquid fuel arriving from the connecting pipe 10 from passing directly into the breather pipe 9.

The latter is positioned in the upper part and preferably opposite the pipe 10 connecting to the valve 7 (Figure 4).

Moreover, as illustrated in Figure 4, the separator 8 preferably has the shape of a labyrinth 12 with the pipes 9 and 10 angled in the same direction and positioned on the opposite ends 12a and 12b of the labyrinth 12.

This further prevents the direct passage of liquid fuel from the connecting pipe 10 to the breather pipe 9.

In the embodiment illustrated in Figures 1 and 3, the breather pipe 9 passes through the fuel tank 1, is integrated with the latter and is connected to the breather pipe 13 from the cap 6a, by a T-shaped union 14.

It should be noticed that the T-shaped union 14 is above the fuel tank maximum level and, in particular, is above the first section 2 maximum level.

This prevents the fuel, passing through the completely full separator 8, from coming out of the breather pipe 9 even if the valve 7 does not close due to a fault.

The fact that the pipe 9 passes through the fuel tank 1 confers compactness on the assembly and facilitates tank fitting and removal.

Alternatively, the breather pipe 9 may also be connected independently of the pipe from the cap 6a. As illustrated in Figure 1, the fuel tank breather pipe 13 can be connected to a canister 15 for recovery of the fuel vapours or may be left free (Figure 1, dashed line), depending on current legislation in the country where the motorcycle is used.

During motorcycle refuelling and running, the fuel tank, in the embodiment illustrated in Figures 1, 3 and 4, operates as follows.

During refuelling, starting with an empty fuel tank, the fuel put in through the inlet 6 fills both sections 2 and 3 of the fuel tank 1, passing through the intermediate section 4 to the upper level of section 4. From this condition, continuing refuelling, the air and fuel vapours in the upper part of the second section 3 are vented out through the valve 7 then the separator 8, the breather pipe 9 and finally the fuel tank breather pipe 13.

Once the maximum fuel level is reached in the second section 3 the valve 7 in contact with the liquid fuel closes and prevents the fuel from coming out in the separator 8.

Therefore, refuelling can continue, also filling the first section 2 until the maximum level of this section is reached, being higher than the second section 3 level by a height H.

The valve 7 has construction and calibration features which allow the liquid fuel seal to be maintained even when the valve is subject to a hydrostatic head generated by the first section 2 level difference H.

During motorcycle operation, the fuel supplied to the engine lowers the fuel level in the first section 2 which is consequently filled with air through the breather in the cap 6a in communication with the pipe 13.

Then, the fuel level can continue to drop until it reaches the second section 3. In this case, the level also drops in the second section 3 and the air which compensates for the reduced fuel level can enter through the valve 7.

In an initial second section 3 emptying condition, the fuel level is still close to the valve 7 and therefore, due to the dynamic movements typical of motorcycles, the fuel may occasionally come out of the valve 7 and fill the separator 8, even due to some delays in valve 7 closure, caused by the inertias of the elements inside the valve (float, etc.).

Then, the fuel in the separator 8 is sucked through the pipe 10 and brought back to the second section 3 through the valve 7, due to the vacuum created in the upper part of the second section 3.

The vacuum generated in the upper part of the second section 3 due to the drop in the fuel level in the second section 3 - this drop caused when the fuel is supplied to run the motorcycle - causes the suction and return of the fuel from the separator 8 to the second section 3, since the pipe 10, being inserted in the lower part of the separator 8, draws from below the level of the fuel contained in the separator 8 and so sucks up the fuel.

The fuel remaining in the separator 8 evaporates through the breather pipe 9, this evaporation being promoted by a given circulation of hot air caused by the nearby exhaust pipe 16.

In the embodiment illustrated in Figure 2 the emptying means 5 comprise a U-shaped breather pipe 17 which connects the upper part of the second section 3 to the upper part of the first section 2.

During refuelling and when the maximum level of the intermediate section 4 is reached, the air and fuel vapours present in the upper part of the second section 3 pass through the pipe 17 and can vent out into the upper part of the first section 2 and, finally, into the breather in the cap 6a in communication with the pipe 13.

Following the first time the fuel tank 1 is completely filled and its subsequent emptying, some fuel stagnates in the pipe 17 due to its U-shape.

This fuel, in the pipe 17 without the possibility of coming out of the ends, generates a resistance (due to the hydrostatic head it creates) which cannot be exceeded by the pressure or the vacuum in the second section 3, and prevents the pipe 17 breather function.

Therefore, suction means 18 are included, located in the lowest point of the U in the pipe 17, returning the stagnant fuel in the pipe 17 to the upper part of the first section 2 through a second pipe 19.

If the suction means 18 cannot operate due to a fault or other reasons, there is a small collection tank 17a connected to the lowest point of the U in the pipe 17 and located below the latter to allow at least pipe 17 emptying by gravity and, therefore, to clear the pipe 17 of fuel for the breather function. The suction means 18 comprise a diaphragm pump 20 driven by the vacuum in the intake manifold (not illustrated) of the motorcycle internal combustion engine.

Alternatively, the suction means 18 comprise an electrically driven pump 20 connected to a control unit 21. The control unit 21 periodically activates the pump 20 to keep the pipe 17 clear of residual fuel.

In particular, periodic pump 20 activation may occur at the moment when the motorcycle is switched off, so that the fuel tank 1 is prepared to be completely filled with fuel.

The motorcycle fuel tank 1 disclosed allows an increase in the fuel capacity by optimum use of the space in the area below and behind the motorcycle seat 1a.

This space is not used by other components, in particular, of the engine and, therefore, these components (airbox, fuel system, cooling system, etc.) can be made with the maximum of freedom.

Moreover, the areas close to the seat are also protected in the event of falls or knocks, contributing to motorcycle safety.

The shape of the fuel tank in front of the seat may be made in an optimum way for riding the motorcycle without additional shapes which could obstruct riding.

The position of the volumes added to the front fuel tank does not raise the motorcycle centre of gravity, with consequent advantages in terms of the motorcycle ride.

Being completely mechanical, the embodiment illustrated in Figures 1, 3 and 4 is also very reliable, since it cannot be subject to electrical/electronic faults.

In any case, even if the valve 7 does not operate correctly, any possibility of fuel dispersion to the outside is prevented by the position above the maximum level of the fuel tank 1 of the outlet of the breather pipe 9 in the T-shaped union 14.

All of the components used to make the fuel tank disclosed are simple and economical to produce and form a single unit with the fuel tank, facilitating unit fitting and removal.

The invention described can be subject to modifications and variations without thereby departing from the scope of the inventive concept as described in the claims.

### LIST OF REFERENCE CHARACTERS

- 1: fuel tank
- 1a: seat
- 2: first section of fuel tank
- 3: second section of fuel tank
- 4: intermediate section of fuel tank
- 5: emptying means
- 6: fuel tank filler inlet
- 6a: inlet closing cap
- 7: roll-over valve (R.O.V.)
- 8: liquid - vapour separator
- 9: breather pipe
- 10: connecting pipe
- 11: separator 8 diaphragm
- 12: separator 8 labyrinth
- 12a,12b: ends of the labyrinth 12
- 4: T union
- 15: canister
- 16: exhaust pipe
- 17: U-shaped breather pipe
- 17a: pipe 17 collection tank
- 18: suction means
- 19: second pipe
- 20: electric pump
- 21: control unit
- H: difference in maximum level between first and second sections 2, 3

## Claims

1. A motorcycle fuel tank with a seat (1a) , the fuel tank (1) comprising a first section (2) located in front of the seat and having an inlet (6) for filling the fuel tank (1) and a second section (3) connected to the first section (2) by an intermediate section (4), the fuel tank being **characterised in that** the second section (3) extends at the back of the seat (1a) in the end part of the motorcycle, the intermediate section (4) being substantially under the seat (1a) and the second section (3) having a maximum fill level higher than the maximum fill level of the intermediate section (4), for optimum use of the space close to the seat (1a) and an increased fuel tank (1) capacity.

2. The fuel tank according to claim 1, **characterised in that** the second section (3) comprises emptying means (5) for emptying the air and fuel vapours trapped in the upper part of the second section (3), when the intermediate section (4) has reached the maximum fill level.

3. The fuel tank according to claim 2, **characterised in that** the emptying means (5) are located in the upper part of the second section (3).

4. The fuel tank according to claim 2 or 3, **characterised in that** the emptying means (5) comprise a roll-over-valve (R.O.V.) (7) designed to act as a breather and to retain the fuel if the second section (3) maximum level is exceeded or if the motorcycle leans or tips over to such an extent as to allow the fuel to flow out.

5. The fuel tank according to claim 4, **characterised in that** the emptying means (5) comprise a liquid - vapour separator (8) connected to the roll-over-valve (R.O.V.) (7) and **in that** the separator (8) has a breather pipe (9) positioned in the upper part of the separator.

6. The fuel tank according to claim 5, **characterised in that** the separator (8) is connected to the roll-over-valve (R.O.V.) (7) by a connecting pipe (10) positioned in the lower part of the separator.

7. The fuel tank according to claim 5 or 6, **characterised in that** the separator (8) has a diaphragm (11) which prevents the liquid fuel coming from the roll-over-valve (R.O.V.) (7) from passing directly into the breather pipe (9).

8. The fuel tank according to any of the claims from 5 to 7, **characterised in that** the separator (8) has the shape of a labyrinth (12).

9. The fuel tank according to claim 8, **characterised in that** the separator (8) has couplings to the connecting pipe (10) and breather pipe (9) angled in the same direction and positioned on opposite ends (12a) and (12b) of the labyrinth (12).

10. The fuel tank according to any of the claims from 5 to 9, **characterised in that** the breather pipe (9) passes through the fuel tank (1) and is integrated with the latter.

11. The fuel tank according to any of the claims from 5 to 10, **characterised in that** the breather pipe (9) outlet is above the fuel tank (1) maximum fill level.

12. The fuel tank according to claim 2 or 3, **characterised in that** the emptying means (5) comprise a U-shaped breather pipe (17) connecting the upper part of the second section (3) to the upper part of the first section (2).

13. The fuel tank according to claim 12, **characterised in that** the emptying means (5) comprise suction means (18) located at the lowest point of the pipe (17) U, to return the fuel stagnating in the pipe (17) to the upper part of the first section (2).

14. The fuel tank according to claim 13, **characterised in that** the emptying means (5) comprise a collection tank (17a) positioned below the pipe (17) and connected to the lowest point of the pipe (17) U, allowing at least pipe (17) emptying by means of gravity.

15. The fuel tank according to claim 13 or 14, **characterised in that** the suction means (18) comprise a pump (20).

16. The fuel tank according to claim 15, **characterised in that** the pump (20) is a diaphragm pump driven by the vacuum in the intake manifold of the motorcycle's internal combustion engine.

17. The fuel tank according to claim 15, **characterised in that** the pump (20) is electrically driven and is connected to a control unit (21).

18. The fuel tank according to claim 17, **characterised in that** the control unit (21) periodically activates the pump (20).

19. The fuel tank according to claim 17, **characterised in that** the control unit (21) activates the pump (20) at the moment when the motorcycle is switched off, preparing the fuel tank (1) to be completely filled with fuel.
